(19)

Europäisches
Patentamt
European
Patent Office
Office européen
des brevets

(11) **EP 2 347 388 B1**

(12) **EUROPEAN PATENT SPECIFICATION**

(45) Date of publication and mention
of the grant of the patent:
**06.08.2014 Bulletin 2014/32**

(21) Application number: **09821480.2**

(22) Date of filing: **21.10.2009**

(51) Int Cl.:
*G06T 7/20* *(2006.01)* *H04N 19/00* *(2014.01)*

(86) International application number:
**PCT/CA2009/001511**

(87) International publication number:
**WO 2010/045730 (29.04.2010 Gazette 2010/17)**

(54) **METHOD, APPARATUS AND SOFTWARE FOR DETERMINING MOTION VECTORS**

VERFAHREN, VORRICHTUNG UND SOFTWARE ZUR BESTIMMUNG VON
BEWEGUNGSVEKTOREN

PROCÉDÉ, APPAREIL ET LOGICIEL PERMETTANT LA DETERMINATION DE VECTEURS DE
MOUVEMENT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **24.10.2008 US 258084**

(43) Date of publication of application:
**27.07.2011 Bulletin 2011/30**

(73) Proprietor: **ATI Technologies ULC
Markham, ON L3T 7X6 (CA)**

(72) Inventor: **WREDENHAGEN, Gordon, Finn
Toronto
Ontario M1W 1J1 (CA)**

(74) Representative: **Kenrick, Mark Lloyd et al
Marks & Clerk LLP
1 New York Street
Manchester, M1 4HD (GB)**

(56) References cited:
**EP-A2- 1 431 917 WO-A2-03/001491
US-A- 4 890 160 US-A- 4 890 160
US-A- 6 049 354 US-A1- 2004 179 594**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

FIELD OF THE INVENTION

The present invention relates generally to image processing, and more particularly to methods and apparatus for determining motion vectors for image sequences.

BACKGROUND

In image processing, a motion vector is a vector that represents the direction and magnitude of the displacement of an object from one image to another. For example, a motion vector may represent the apparent motion of an object between two sequential image frames in a video sequence. Motion vectors are used, for example, in video compression and video frame rate conversion.

One conventional technique for determining motion vectors searches two images for matching regions, and uses the relative displacement between matching regions to define the motion vectors for the two images. Typically, the second image is segmented into regions of one or more pixels. For every segmented region in the second image, the first image is searched for the region that best matches the segmented region under consideration.

An alternative technique is to determine a correlation surface for the two images, or portions of an image. A correlation surface represents the correlation of two images if the two images are displaced relative to each other in all directions and magnitudes. Typically, the points corresponding to the peaks of the correlation surface may be used to determine candidate motion vectors. However, candidate motion vectors do not necessarily correspond to actual motion of objects between the two images. Further calculation is required to determine motion vectors that best correspond to the actual motion of objects from the candidate motion vectors.

Thus, there is a need for methods and apparatus for determining motion vectors that can overcome one or more problems mentioned above.

SUMMARY OF THE INVENTION

In accordance with an aspect of the present invention, there is provided a method of determining motion vectors for first and second images, wherein: (a) obtaining at least one candidate motion vector representing motion from said first image to said second image; (b) determining a region in said first image and said second image for which said at least one candidate motion vector describes a change in position of said region from said first image to said second image; (c) modifying said first and second images by setting pixel intensities in said region in said first and second images to a default intensity; and (d) repeating said obtaining, determining, and modifying, using said first and second images as modified in (c), wherein said obtaining and said determining exclude pixels of said default intensity until a desired number of motion vectors have been determined for said first and second images.

In accordance with another aspect of the present invention, there is provided a first logic block for obtaining at least one candidate motion vector representing motion from said first image to said second image; a second logic block for determining a region in said first image and said second image for which said at least one candidate motion vector describes a change in position of said region from said first image to said second image; a third logic block for modifying said first and second images by setting pixel intensities in said region in said first and second images to a default intensity; and wherein said first, second and third logic blocks repeat said obtaining, determining, and modifying, using said first and second images as modified by said third logic block, wherein said obtaining and said determining excludes pixels of default intensity until a desired number of motion vectors have been determined for said first and second images.

Generally described below is a video processor comprising: a first logic block for obtaining at least one candidate motion vector representing motion of a region from the first image to the second image; a second logic block for determining the region in the first image and the second image associated with the at least one candidate motion vector; a third logic block for modifying the first and second images by setting pixel intensities in the region in the first and second images to a default intensity; and wherein the first, second and third logic blocks repeat the obtaining, determining, and modifying, using the first and second images as modified by the third logic block, until a desired number of motion vectors have been determined for the first and second images.

BRIEF DESCRIPTION OF THE DRAWINGS

In the figures, which illustrate, by way of example only, embodiments of the present invention;

FIG. 1 is a schematic block diagram of a computing device, exemplary of an embodiment of the present invention;

FIG. 2 is a schematic diagram showing a sequence of images;

FIG. 3 is a schematic diagram of the first image frame in FIG. 2, showing the individual pixels of a portion of the first frame in a coordinate system;

FIG. 4 is a schematic diagram of the first image frame in FIG. 2, showing the intensity values of individual pixels of a portion of the first frame;

FIG. 5 is a superposition of the first and second image frames of FIG. 2 with their outer edges co-registered;

FIG. 6 is a flowchart of a method of motion vector determination;

FIG. 7 shows a modified version of the first image frame in FIG. 2;

FIG. 8 shows a modified version of the second image frame in FIG. 2;

FIG. 9 is a flowchart for a method of obtaining candidate motion vectors;

FIG. 10 is a correlation surface of the first and second image frames of FIG. 2;

FIG. 11 shows the first image frame of FIG. 2 displaced relative to the second image frame of FIG. 2;

FIG. 12 is a flowchart for a method of motion vector determination;

FIG. 13 shows a twice modified version of the first image frame in FIG. 2;

FIG. 14 shows a twice modified version of the second image frame in FIG. 2;

FIG. 15 is a flowchart for a method of motion vector determination;

FIG. 16 is a flowchart for a method of determining first and second regions in the first and second image frames in FIG. 2 associated with candidate motion vectors;

FIG. 17 shows the first image frame of FIG. 2 displaced relative to the second image frame of FIG. 2; and

FIG. 18 is a simplified block diagram of a video processor, exemplary of an embodiment of the present invention.

DETAILED DESCRIPTION

In overview, in a method exemplary of embodiments of the present invention, motion vectors are determined from two images by obtaining one or more candidate motion vectors from the two images. Regions of the two images associated with the candidate motion vector are modified. Thereafter, further candidate motion vectors are obtained from the modified images. It has been found that modifying the two images to remove from consideration objects associated with an already obtained candidate motion vector can improve the quality of candidate motion vectors subsequently obtained from the modified images. Candidate motion vectors may thereafter be further processed and analysed to obtain motion vectors useable in video processing.

The regions may represent the same object within the images; portions of objects; image portions having a defined geometry (e.g. square or rectangular blocks); or the like.

In effect, motion vectors are determined iteratively or recursively. Once an adequate motion vector has been determined using for example phase correlation, minimum sum of absolute differences, matching methods based on object segmentation, colour similarity, and so on, regions giving rise to the motion vector not considered in subsequent correlation and assignment. This eliminates content cross-talk that inevitably occurs when regions for which motion vectors are unnecessarily reconsidered in subsequent correlation and matching.

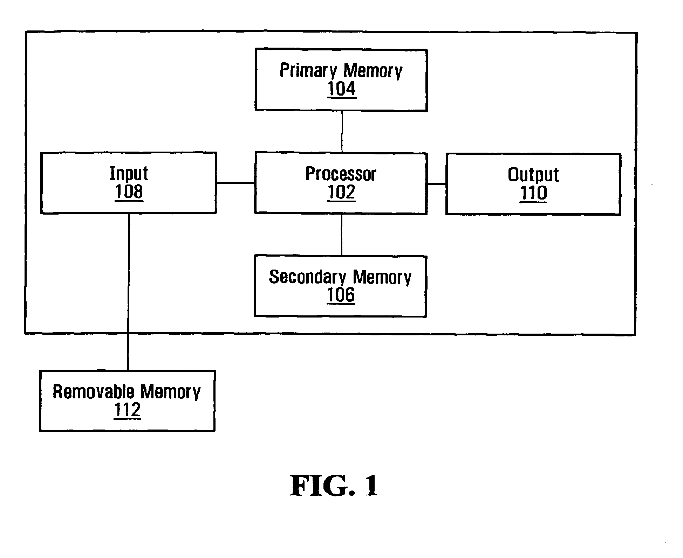

In one embodiment, the method may be performed, at least in part, by a device capable of video processing. A suitable video processing device may take the form of a video processor forming part of a set-top box, a video receiver, a television, a graphics subsystem, a computing device, or the like. In FIG. 1, a computing device 100 exemplary of embodiments of the present invention is schematically illustrated.

Computer 100 includes a processor 102, which communicates with primary memory 104, secondary memory **106,** and input and output peripheral **108,110.** Computer **100** may optionally communicate with a network (not shown).

Processor **102** may be a general purpose processor, and may include one or more processing cores, for processing computer executable codes and data.

Each of memories **104** and **106** is suitable for storing electronic data including processor executable code. Primary memory **104** is readily accessible by processor **102** at runtime and may take the form of synchronous dynamic random access memory (SDRAM). Secondary memory **106** may include persistent storage memory for storing data permanently, typically in the form of electronic files. Secondary memory **106** may also be used for other purposes known to persons skilled in the art. A computer readable medium may be any available media accessible by a computer, either removable or non-removable, either volatile or non-volatile, including any magnetic storage, optical storage, or solid state storage devices, or any other medium which may embody the desired data including computer executable instructions and can be accessed, either locally or remotely, by a computer or computing device. Any combination of the above is also included in the scope of computer readable medium.

Input peripheral **108** may include one or more suitable input devices, and typically includes a keyboard and a mouse. It may also include a microphone, a scanner, a camera, and the like. It may also include a computer readable medium such as removable memory **112** and the corresponding device for accessing the medium. Input peripheral **108** may be used to receive input from the user. An input device may be locally or remotely connected to processor **102.**

Output peripheral **110** may include one or more output devices, which may include a display device, such as a monitor. Suitable output devices may also include other devices such as a printer, a speaker, and the like, as well as a computer writable medium and the device for writing to the medium. Like an input device, an output device may be local or remote.

It will be understood by those of ordinary skill in the art that computer system **100** may also include other, either necessary or optional, components not shown in the figure.

Memory **104, 106** or **112** may be used to store image or computation data, calculation results, or other input and output data used in the motion vector generation process.

Memory **104, 106** or **112** may also store processor executable code, which when executed by processor **102** causes computer **100** to carry out any of the methods described herein. For example, the processor executable code may include code for obtaining at least one candidate motion vector from a first image and a second image; code for determining a first region in said first image and a second region in said second image; code for modifying said first and second images; and code for obtaining and storing a candidate motion vector from said modified first and second images, as will be further described below.

As can be appreciated, methods described herein may also be carried out in whole or in part using a hardware device having circuits for performing one or more of the described calculations or functions. For example, the functions of one or more of the above mentioned program code may be performed by a graphics processor, a component thereof, or one or more application specific integrated circuits (ASICs).

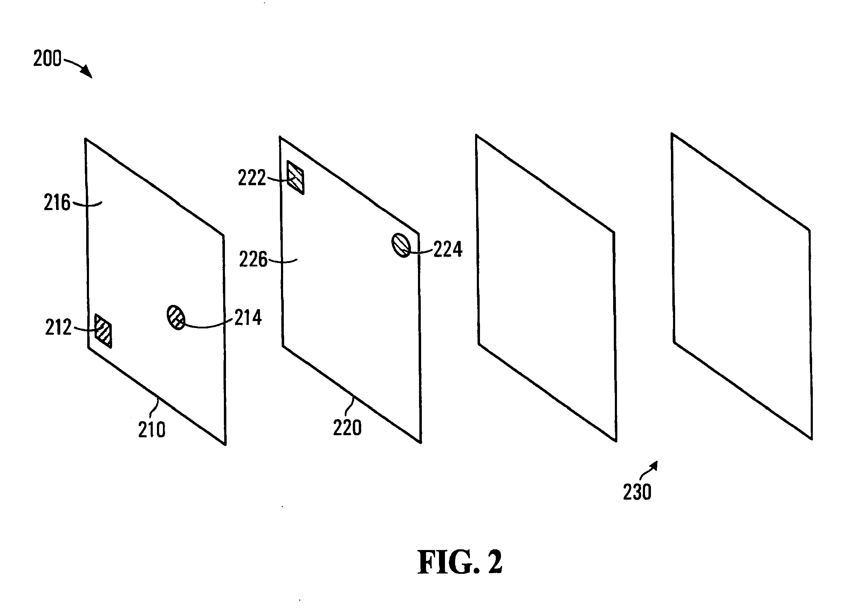

Motion vectors can be determined using embodiments of the present invention from any two images. For the purposes of illustration, it is assumed that motion vectors are to be determined from an image frame **210** and an image frame **220** in a video sequence **200** as shown in **FIG. 2.** Methods can also be applied to image frames **230** subsequent to image frame **220** in video sequence **200.** For purposes of illustration, in first image frame **210,** white background **216** defines a black square object **212** and a black circular object **214.** In second image frame **220,** white background **226** also defines a black square object **222** and a black circular object **224.**

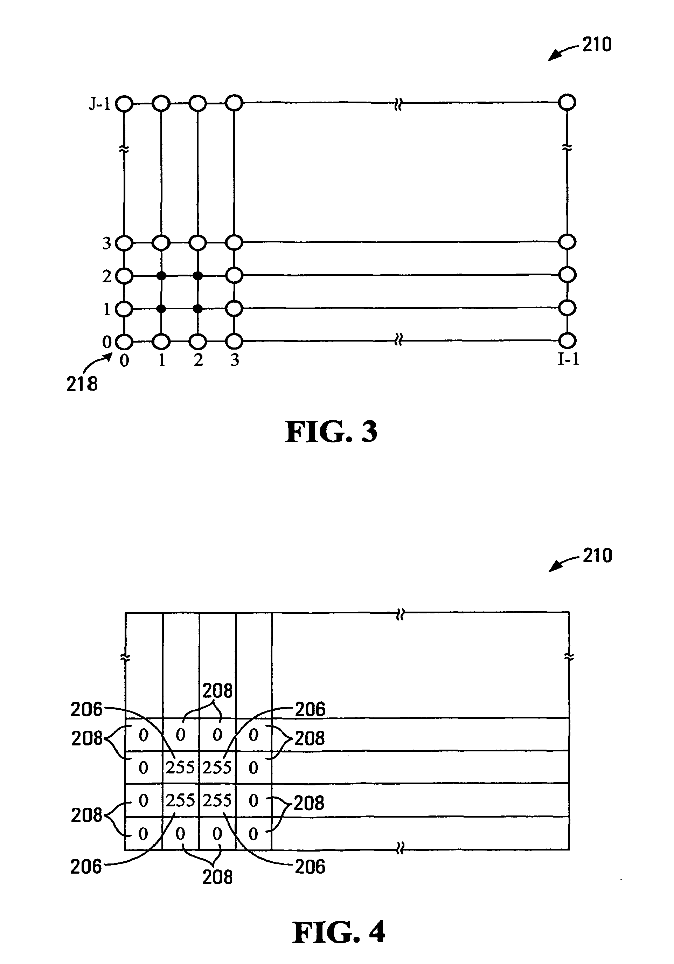

Typically, an image is represented as a grid of pixels referenced by a two-dimensional coordinate system. For illustration, it is assumed that the origin is a corner of the image and the first and second axes extend outwards from the origin along the edges of the image. This exemplary coordinate system is illustrated in **FIG. 3** where the origin is corner **218** of image frame **210,** the X axis extends outwards from the origin along the horizontally depicted edge of image frame **210,** and the Y axis extends outwards from the origin along the vertically depicted edge of image frame **210.**

In this exemplary coordinate system, the coordinates of individual pixels **202** are represented in the form [a,b] where the first coordinate, a, is in reference to the X axis and the second coordinate, b, is in reference to the Y axis. For an exemplary image p, individual pixels of the image are referenced with the notation p[a,b]. Assuming this exemplary coordinate system, image frames **210** and **220** are rectangular, of size I x J.

**FIG. 4** is a schematic diagram of image frame **210** showing the intensity values of individual pixels **206** and **208** of a portion of image frame **210.** In the example embodiment, intensity values of individual pixels of image frames **210** and **220** are represented using 8 bits, and thus range from 0 to 255. Black pixels **206** have the intensity value of 255. As will be appreciated, intensity values could easily be represented by more or fewer than 8 bits per pixel. Similarly, colour (chroma) values in addition to, or in place of intensity values, of pixels could be used to determine motion vectors and associated pixel regions as described herein.

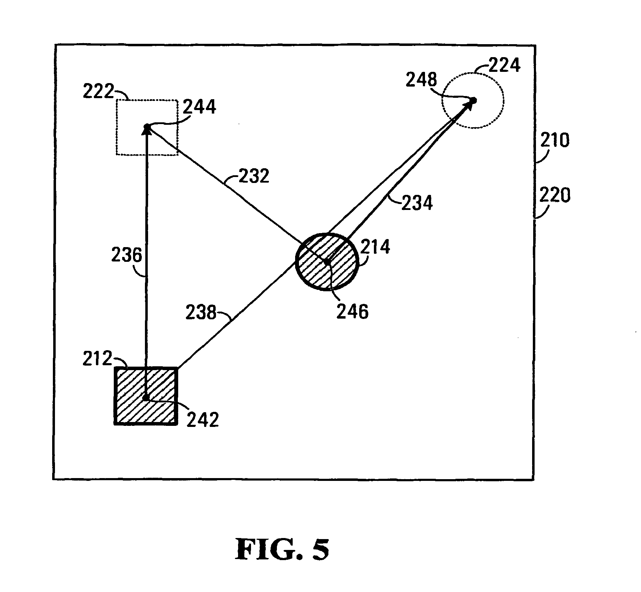

The superposition of image frame **210** over image frame **220** is shown in **FIG. 5.** Image frames **210** and **220** use the same co-ordinate system, so that the outer edges of image frames **210** and **220** coincide. Vector **236** describes the change in position of black square objects **212** and **222** between image frame **210** and image frame **220.** Vector

$MV_1 = [x_1, y_1]$ **236** has a starting position **242** corresponding to the coordinates of the center of black square object **212** in image frame **210** and an ending position **244** corresponding to the coordinates of the center of the black square object **222** in image frame **220**. A similar vector $MV_2 = [x_2, y_2]$ **234,** starting at position **246** and ending at position **248,** describes the change in position of black circular regions **214** and **224** between images frames **210** and **220**. Regarding the changes in position of black objects **212, 222, 214,** and **224** as motion, vectors **236** and **234** are true motion vectors as they describe the motion of black objects **212, 222, 214,** and **224** between image frame **210** and image frame **220**. Vectors $MV_3 = [x_3, y_3]$ **232** and $MV_4 = [x_4, y_4]$ **238** defined similarly are false motion vectors as they do not describe the motion of black objects **212, 222, 214,** and **224** between image frames **210** and **220**. In this exemplary description, a list of motion candidate motion vectors that includes motion vectors **236** and **234** is determined.

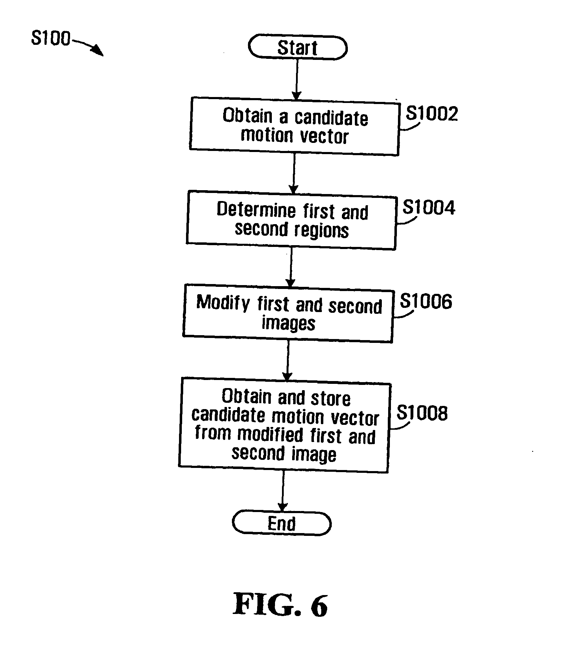

Motion vectors can be determined from image frames **210** and **220** according to blocks **S100** illustrated in **FIG. 6,** exemplary of embodiments of the present invention. For ease of explanation, blocks **S100** will be illustrated with reference to sequential image frames **210** and **220** of video sequence **200**.

At **S1002,** candidate motion vectors are obtained from image frames **210** and **220** in a conventional manner. For example, motion vector $MV_1$ **236** can be determined from image frames **210** and **220 [HOW?],** using block matching techniques, by inspecting image frames **210** and **220** to identify black square objects **212** and **222** as corresponding objects, then determining the vector that describes the change in position of black square objects **212** and **222,** or otherwise. Typically, multiple candidate motion vector can be obtained from two images.

At **S1004,** a first region in image frame **210** and a second region in image frame **220** are determined to be associated with an obtained candidate motion vector. Both the first region in image frame **210** and the second region in image frame **220** may consist of one or more discontinuous regions of image frames **210** and **220** respectively. Assuming the obtained candidate motion vector is motion vector $MV_1$ **236,** in one embodiment, image frames **210** and **220** may be compared to block match corresponding pairs of objects or blocks that appear in both image frame **210** and image frame **220**. For each pair of corresponding objects, if motion vector $MV_1$ **236** correctly describes the change in position of the objects between image frames **210** and **220,** then the regions of image frames **210** and **220** corresponding to the pair of objects are considered to be part of the first and second regions respectively. Analysis of image frames **210** and **220** should identify black square objects **212** and **222** as forming one pair of corresponding objects, and black circular objects **214** and **224** as forming a second pair of corresponding objects. As motion vector $MV_1$ correctly describes the change in position of black square objects **212** and **222** and does not correctly describe the change in position of black circular objects **214** and **224,** the first region in image frame **210** is determined to be equivalent to region **212** and the second region in image frame **220** is determined to be equivalent to region **222.** In embodiments of the present invention where more than one candidate motion vector is obtained at **S1002,** regions of image frames **210** and **220** are associated with one or more obtained candidate motion vector for the region to be considered part of the first and second regions determined at **S1004.**

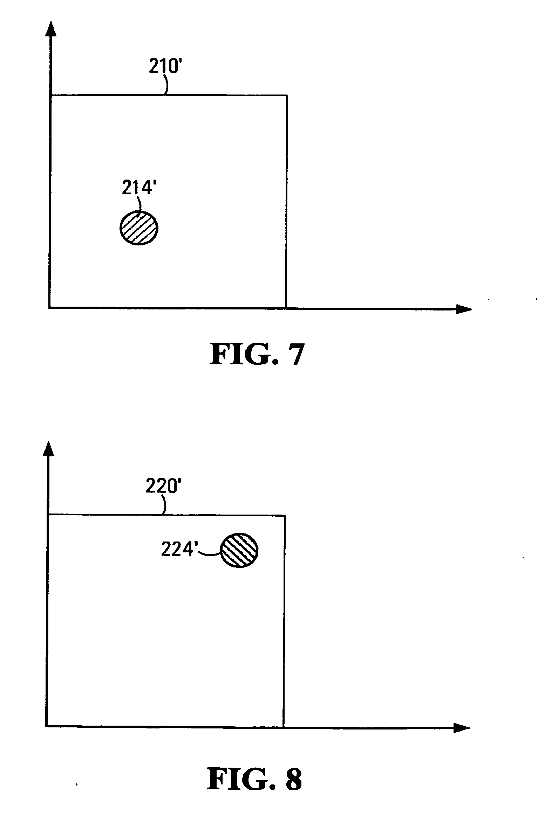

At **S1006,** the first and second region in image frames **210** and **220** are modified by setting the intensity values of the pixels in both regions to a default intensity value. In one embodiment, the default intensity value is zero. **FIGS. 7** and **8** illustrate modified image frames **210'** and **220'** where the above determined first and second regions in image frames **210** and **220** are modified by setting the intensity values of the pixels in the first and second regions to zero. As black circular objects **214** and **224** were not previously determined to be associated with candidate motion vector $MV_1$ **236,** black circular objects **214'** and **224'** appear in modified image frames **210'** and **220'**. As black square objects **212** and **222** were previously determined to be associated with candidate motion vector $MV_1$ **236,** corresponding black square objects do not appear in **210'** and **220'.**

At **S1008,** an additional candidate motion vector is obtained from modified image frames **210'** and **220'**. As at **S1002,** candidate motion vectors may be determined in a conventional manner - e.g. by block matching. Conveniently, pixels with default intensity values may be ignored in such a determination. Modified image frames **210' and 220'** are analyzed to identify corresponding objects with pixels at non-default intensity values from which the vector describing the change in position of the objects from image frame **210'** to image frame **220'** can be considered a candidate motion vector. As such, the additional candidate motion vector obtained from modified image frames **210'** and **220'** is more likely to be a true motion vector in comparison to an additional candidate motion vector obtained from unmodified image frames **210** and **220.**

For purposes of illustration, as the pixels forming black square objects **212** and **222** have been set to default intensity values indicating that these pixels are to be ignored, visual inspection of modified image frames **210' and 220'** may determine true motion vector $MV_2$ **234** as a candidate motion vector, whereas visual inspection of unmodified image frames **210** and **220** may result in the determination of false motion vectors $MV_3$ **232** or $MV_4$ **238** as a candidate motion vector. In other embodiments of the present invention, more than one candidate motion vector can be obtained from modified image frames **210'** and **220'.**

The one or more candidate motion vectors obtained from modified image frames **210'** and **220'** are stored, together with the one or more candidate motion vectors obtained from unmodified image frames **210** and **220,** as candidate motion vectors for image frames **210** and **220**. These candidate motion vectors can be stored in computer memory **104, 106,** or **112** for further processing.

In some embodiments, a candidate motion vector may be obtained through calculating a correlation of image frames **210** and **220** where image frame **210** has been displaced relative to image frame **220**. If the calculated correlation satisfies a selected condition, the displacement of image frame **210** relative to image frame **220** is determined to be a candidate motion vector.

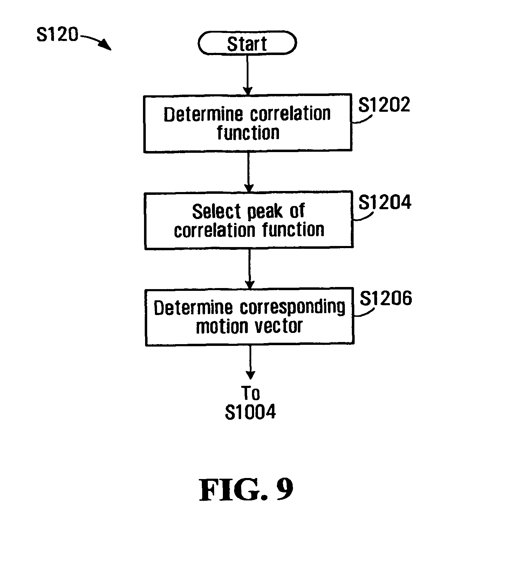

**FIG. 9** illustrates an exemplary blocks **S120** to obtain a candidate motion vector from image frames **210** and **220,** employed at **S1002** of blocks **S100.**

At **S1202,** a correlation function may first be determined from image frames **210** and **220.** The dependent variable of a correlation function is the correlation of image frames **210** and **220** where image frames **210** and **220** are displaced relative to one another by independent variables specifying the relative displacement of image frames **210** and **220.** The correlation function may be described in the form f(x,y) where the independent variable x specifies the relative displacement of image frames **210** and **220** in the X axis and the independent variable y specifies the relative displacement of image frames **210** and **220** in the Y axis. As image frames **210** and **220** are both I x J in size, f(x,y) is defined over the domain -I < x < I, -J < y < J.

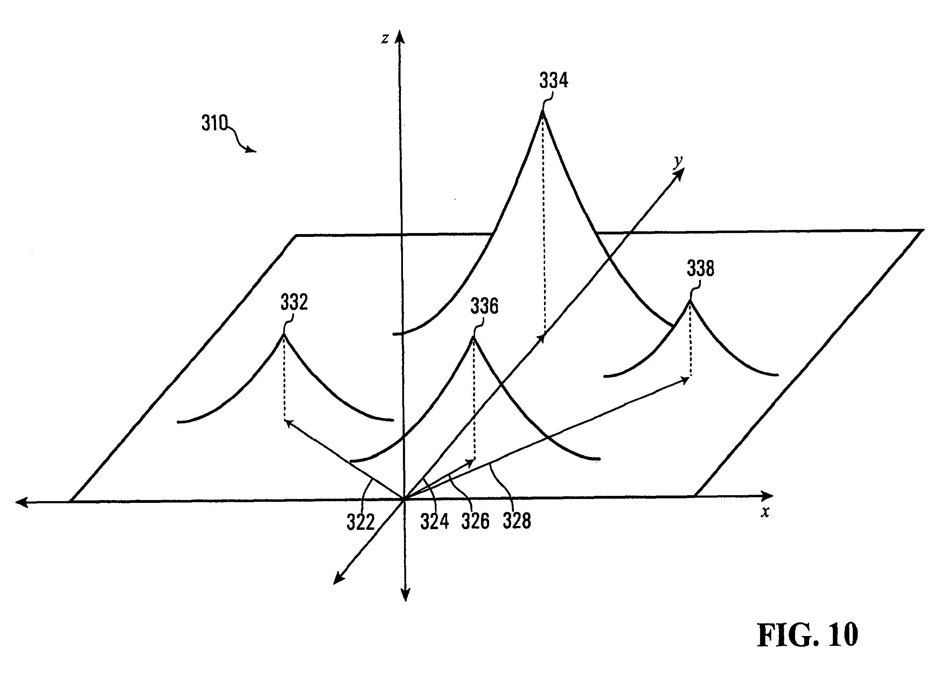

Correlation function f(x,y) can be visualized as correlation surface **310** as depicted in **FIG. 10.** Correlation surface **310** is represented in a coordinate system where the X and Y axes respectively indicate the displacement of image frame **210** relative to image frame **220** along the X and Y axes as defined for an image, and the Z axis of the coordinate system indicates the degree of correlation between relatively displaced image frames **210** and **220.** As a correlation surface is merely a visualization of a correlation function, the terms correlation surface and correlation function may be used interchangeably.

At **S1204** and **S1206,** a point on correlation surface **310** satisfying a condition may be used to determine a corresponding vector that may be treated as a candidate motion vector. The corresponding vector is typically defined as the vector originating at the origin and ending at the projection of the selected point onto the X-Y plane. Using the previously described convention for representing a vector, an arbitrary point (x,y,f(x,y)) on correlation surface **310** typically corresponds to candidate motion vector [x,y]. A variety of conditions may be employed in order to select an appropriate point of correlation surface **310** from which to determine a candidate motion vector.

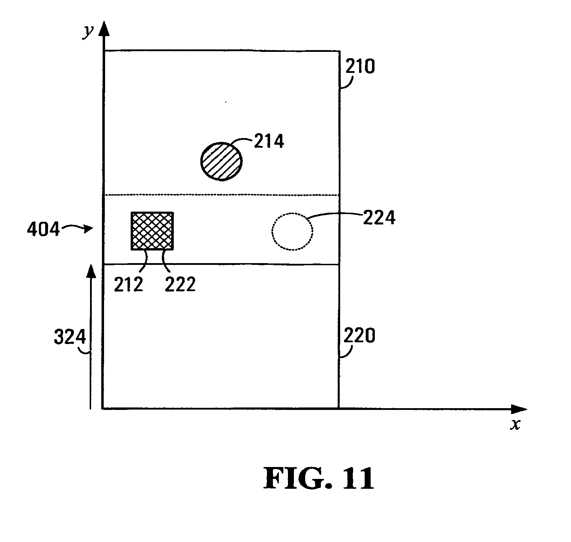

Exemplary points on correlation surface **310** of relatively high correlation **332, 334, 336,** and **338** are considered peaks of correlation surface **310.** Point **334** is generated by displacing image frame **210** relative to image frame **220** by vector **324** originating at the origin and ending at the projection of point **334** onto the X-Y plane. **FIG. 11** exemplfies the displacement of image frame **210** relative to image frame **220** by vector **324.** The Z-coordinate of point **334** is calculated as the correlation of overlapped region **404.** Points **336, 332,** and **338** are similarly generated by displacing image frame **210** relative to image frame **220** by vectors **326, 322,** and **328** respectively and calculating the correlation of overlapped regions.

At **S1204** and **S1206,** in one embodiment, a peak of correlation surface **310** is identified and used to determine a corresponding vector thereafter considered a candidate motion vector. Conventional techniques to identify local maxima of functions can be utilized to identify a peak of correlation surface **310.** In another embodiment, maximum peak **334** of correlation surface **310** is identified and used to determine candidate motion vector **324.** In other embodiments of the present invention, multiple peaks of correlation surface **310** can be identified and used to determine multiple candidate motion vector.

In another embodiment of the present invention, the correlation function determined from image frames **210** and **220** at **S1202** is a phase correlation, also known as a phase plane correlation surface. The use of a phase correlation can be advantageous in comparison to a different correlation function such as a cross-correlation as the phase correlation normalizes the correlation with respect to the luminance of pixels. A phase correlation is defined below for two images A and B of size I x J following the previously described convention for referring to the individual pixels of images.

$$phase\ correlation(A, B) = \mathfrak{I}^{-1}(h),$$

where

$$h[x, y] = \frac{\aleph((\mathfrak{I}(A))[x, y])(\mathfrak{I}(B))[x, y]}{|\aleph((\mathfrak{I}(A))[x, y])\|(\mathfrak{I}(B))[x, y]|}$$

$\mathfrak{I}$ (f) = discrete fourier transform of f

$\mathfrak{I}^{-1}$ *(f) = inverse discrete fourier transform of f*

$\aleph$ *(x) = complex conjugate of x*

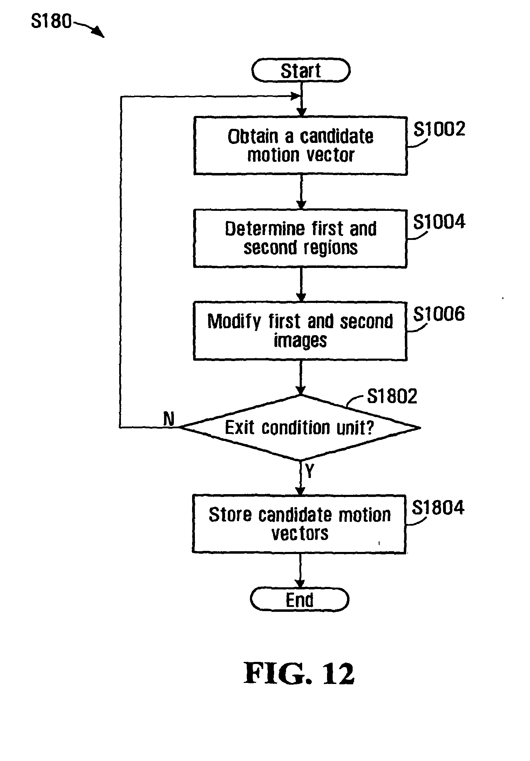

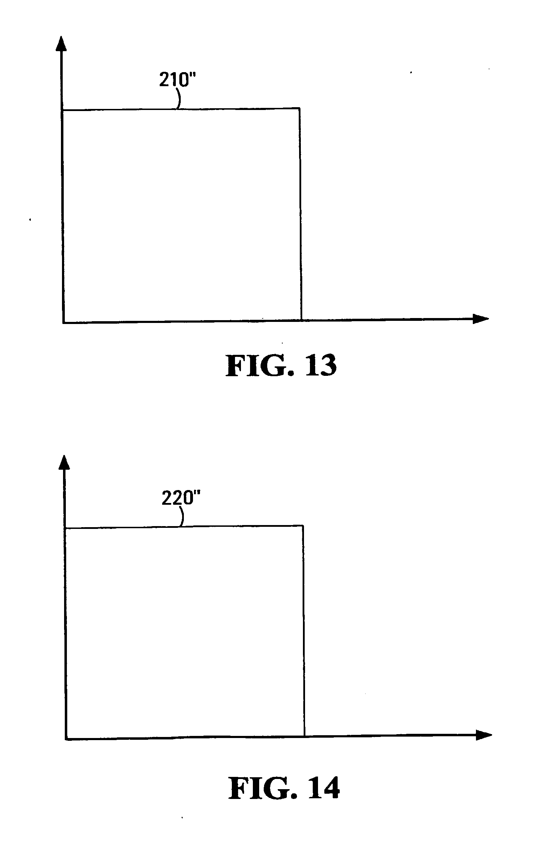

**FIG. 12** illustrates one embodiment whereby obtaining and storing a candidate motion vector from exemplary modified image frames **210'** and **220'** entails repeating the previously described process. At **S1002,** candidate motion vector $MV_1$ **236** is obtained from image frames **210** and **220.** At **S1004,** first and second regions of image frames **210** and **220** are determined to be associated with candidate motion vector $MV_1$ **236.** At **S1006,** determined first and second regions of image frames **210** and **220** are modified, forming modified image frames **210' and 220'.** At **S1802,** an exit condition is tested to determine whether a desired number of motion vectors have been obtained, or if additional candidate motion vectors should be extracted from modified image frames **210'** and **220'.** If the exit condition is met, obtained candidate motion vectors, so far candidate motion vector $MV_1$ **236,** are stored at **S1804** as candidate motion vectors for image frames **210** and **220.** If the exit condition is not met, the process is repeated for modified image frames **210'** and **220'.** At **S1002,** candidate motion vector $MV_2$ **234** is obtained from modified image frames **210'** and **220'.** At **S1004,** first and second regions of modified image frames **210'** and **220'** are determined to be associated with candidate motion vector $MV_2$ **234.** The first region of modified image frame **210'** is the region defined by black circular object **214'.** The second region of modified image frame **220'** is the region defined by black circular object **224'.** At **S1006,** determined first and second regions of modified image frames **210'** and **220'** are modified, forming further modified image frames **210"** and **220"** as depicted in **FIG. 13.** At **S1802,** the exit condition is again tested to determine whether additional candidate motion vectors should be extracted from twice modified image frames **210"** and **220".** Assuming the exit condition is met, candidate motion vectors $MV_1$ **236** and $MV_2$ **234** are stored at **S1804** as candidate motion vectors for image frames **210** and **220.**

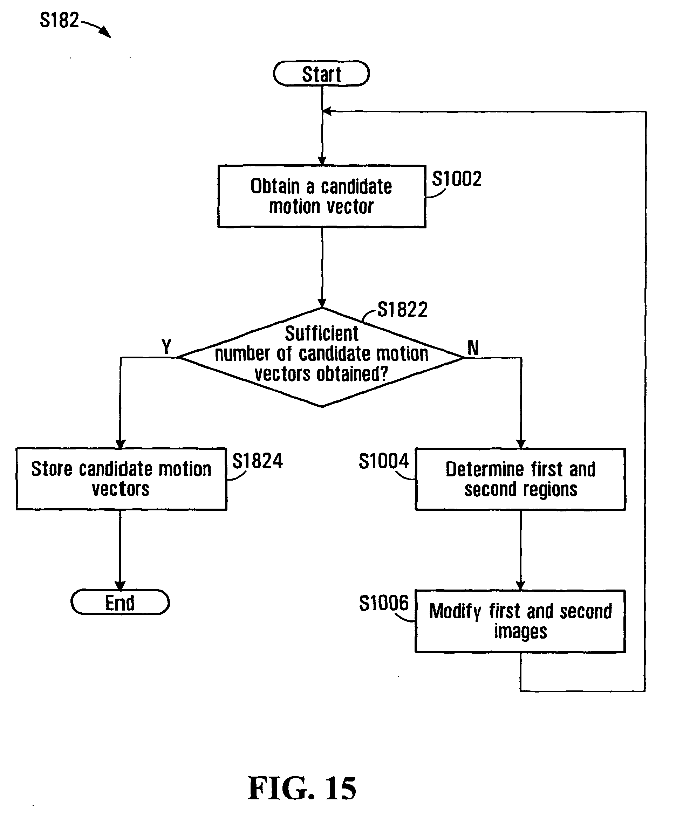

There are a variety of suitable exit conditions that may be utilized. In one embodiment, the exit condition may constitute examining the modified images to determine whether at least one of the modified images has been modified so that the proportion of the modified image that has the default intensity value is greater than a selected threshold. **FIG. 15** illustrates another embodiment of the present invention where the exit condition constitutes determining whether a sufficient number of candidate motion vectors have been already obtained. In this embodiment, exit condition **S1822** is tested prior to **S1004** as additional modification is unnecessary if the exit condition is already met. If the exit condition is met, the obtained candidate motion vectors are stored at **S1824.** If the exit condition is not met, first and second regions are determined at **S1004,** the images are modified at **S1006,** and a candidate motion vector is obtained from modified images at **S1002** prior to the exit condition again being considered at **S1822.**

It is worth noting that an exit condition does not necessarily require all of the pixels of the images to be assigned a motion vector. Often when there is relative motion between two images there are occlusions and uncoverings. These regions represent content that has become hidden and content that is new. Such content has no correspondence and usually requires separate treatment.

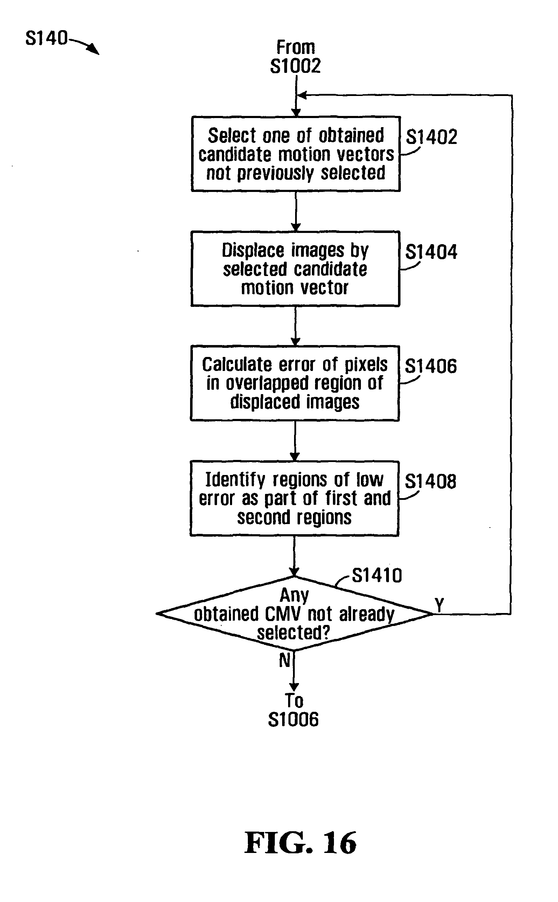

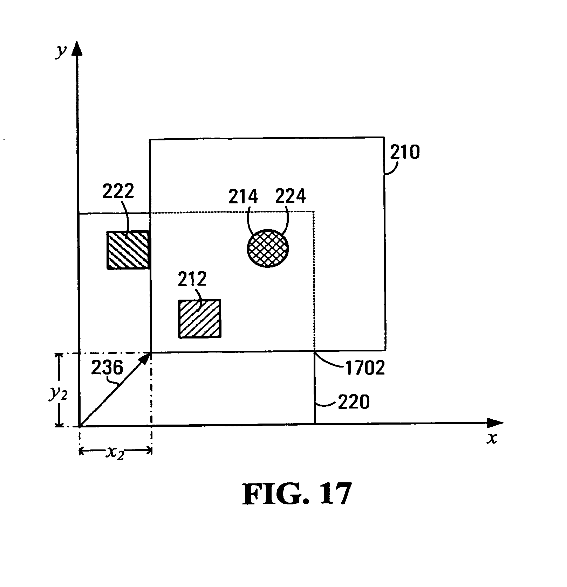

Once a candidate motion vector has been determined, first and second regions associated with that candidate motion vector may be determined as illustrated in **FIG. 16.** Illustrating process **S140** with exemplary image frames **210** and **220,** it is assumed that candidate motion vector $MV_2=[x_2,y_2]$ **236** has been obtained from **S1002.** At **S1404,** image frame **210** is displaced by $x_2$ in the X axis and $y_2$ in the Y axis relative to image frame **220** as illustrated in **FIG. 17.**

At **S1406,** an error value is calculated for groups of pixels in overlapped region **1702.** Grouping of pixels may be done in any conventional manner. For example, adjacent pixels forming rectangles or squares may be grouped. Alternatively, pixels within detected object edges may be group. The error value calculated can be the sum of absolute differences in intensity value between a group of pixels in frame **210** as displaced by $MV_2$, and that group of pixels in frame **220.** Of course, error calculation could be filtered-anistropic, bilaterally, or otherwise so that the calculated error value for a group of pixels is a function of the position and intensity values of a region surrounding the group of pixels.

At **S1408,** a first region in image frame **210** as displaced and a corresponding second region in image frame **220** are compared to determine if a calculated error comparison satisfies a selected condition. If so, the first region is determined to be pixels in image frame **210** that are part of the group of pixels satisfying the selected condition. Similarly, the second region is determined to be pixels in image frame **220** that are part of a pair of pixels satisfying the selected condition. In one embodiment of the present invention, groups of pixels in frame **220** corresponding to a minimum error to a group of corresponding pixels in frame **210** (less than a selected threshold) may be treated as first and second group of pixels associated with the candidate motion vector $MV_1$ **236.** Other conditions that may be employed include testing for whether the average calculated error of a block of pixels is less than a selected threshold, or some other function of the error values of a region of pixels.

For example, assuming the error value calculated is the absolute difference in intensity values and the condition that needs to be satisfied is that the error value is near zero, at **S1406,** the coincident groups of pixels in overlapped region **1702** have an error value near. Thus, the first region in image frame **210** associated with candidate motion vector $MV_1$ **236** may be the region of image frame **210** in overlapped region **1702** except for the pixels representing black square object **212.** Similarly, the second region in image frame **220** associated with candidate motion vector MV$_1$ **236** is the region of image frame **220** in overlapped region **1702** except for the pixels coincident with pixels representing black square object **212.**

At **S1410,** process **S140** may be repeated for each obtained candidate motion vector from **S1002.**

Now, the regions determined to be associated with each obtained candidate motion vector in each frame **210, 220** may be modified by setting pixel intensities in frames **210, 220** to a default intensity. Once regions have been modified, additional candidate motion vectors may be determined, by for example, repeating blocks **S100** or **S120.**

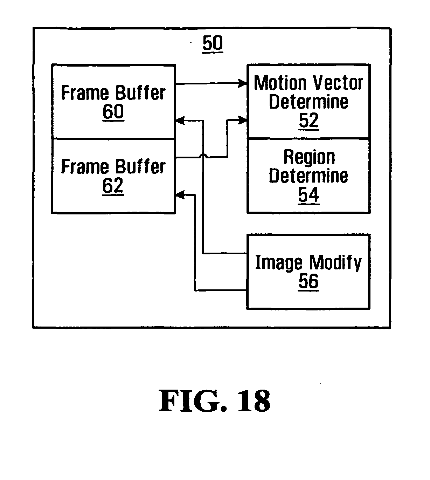

As will now be appreciated, the above described techniques may be implemented exclusively or partially in hardware. To this end, as illustrated in **FIG. 18,** a video processor 50 may be formed to include several functional blocks **52, 54** and **56** including a first functional block **52** for obtaining at least one candidate motion vector representing motion of a region from a first image to a second image; a second functional block **54** for determining the region in the first image and the second image associated with the at least one candidate motion vector; and a third functional block **56** for modifying the first and second images by setting pixel intensities in the region in the first and second images to a default intensity. The first, second and third logic functional blocks repeat the obtaining, determining, and modifying, using the first and second images as modified by the third functional block, until a desired number of motion vectors have been determined for said first and second images.

As will be appreciated, each of the functional blocks may be formed using suitable combinatorial or sequential hardware logic. Alternatively, the fuctional blocks may be formed using a combination of software logic and/or hardware logic. Video processor **50** may include one or more frame buffers **60, 62** to store the images for which candidate vectors are to be determined, or it may operate on external frame buffers (not illustrated). Each of the functional blocks may be formed to operate as described above - e.g. to calculate phase correlation, or the like. Video processor **50** may further be under software or firmware control.

As will now be appreciated, initial pre-processing of the two images can be performed. Although the two images have been herein assumed to be rectangular and identical in size in both the X and Y axes, dissimilar images can be initially modified by appending a default value to ensure they are of identical size. Similarly, colour images can modified by conventional techniques to become grayscale images.

In other embodiments of the present invention, the correlation function may be interpolated to achieve sub-pixel resolution for the obtaining of corresponding candidate motion vectors.

The modification of the first and second images can vary in accordance with the technique employed to obtain candidate motion vectors from the modified first and second images. In previously described embodiments of the present invention, the intensity value of pixels in the first and second regions are set to zero. Conveniently, the phase correlation function can be constructed so as to ignore pixels with an intensity value of zero. In other embodiments of the invention, the intensity values may be modified to other default values to effect similar consequences.

Other features, benefits and advantages of the embodiments described herein not expressly mentioned above can be understood from this description and the drawings by those skilled in the art.

Of course, the above described embodiments are intended to be illustrative only and in no way limiting. The described embodiments are susceptible to many modifications of form, arrangement of parts, details and order of operation, provided that those modifications still fall within the scope of the appended claims.

**Claims**

1. A method of determining motion vectors for first and second images (210,220), **characterized by**:

   (a) obtaining at least one candidate motion vector (234,236) representing motion from said first image to said second image;
   (b) determining a region in said first image (212,214) and said second image (222,224) for which said at least one candidate motion vector describes a change in position of said region from said first image to said second image;
   (c) modifying said first and second images by setting pixel intensities in said region in said first and second images to a default intensity; and
   (d) repeating until a desired number of motion vectors have been obtained for said first and second images said obtaining, determining, and modifying, using said first and second images as modified in (c), wherein said obtaining and said determining ignore pixels of said default intensity.

2. The method of claim 1, wherein said obtaining at least one candidate motion vector comprises:

   calculating a correlation between said first and second images as a function of displacement of one of said first and second images relative to the other of said first and second images; and

when said correlation satisfies a selected condition, selecting a motion vector representing said displacement as said candidate motion vector from said first and second images.

3. The method of claim 2, wherein said selected condition is satisfied when said correlation is a local maximum or local minimum.

4. The method of claim 3, wherein said selected condition is satisfied when said correlation is the maximum.

5. The method of claim 2, wherein said correlation function is a phase correlation function.

6. The method of claims 1, wherein said default intensity has an intensity value of zero.

7. The method of claim 1, wherein said obtaining at least one candidate motion vector comprises searching said first image and said second image for matching regions.

8. A computer (100) comprising a processor (102) and a computer readable memory (104,106), adapted to perform the method of claim 1.

9. A computer readable medium (112) storing thereon computer executable code, said code when executed by a computer adapts said computer to perform the method of claim 1.

10. The method of claim 5, wherein said determining comprises determining a local maxima of said phase correlation.

11. A video processor (50) **characterized by**:

a first logic block (52) for obtaining at least one candidate motion vector (234,236) representing motion from said first image (210) to said second image (220);

a second logic block (54) for determining a region in said first image (212,214) and said second image (222,224) for which said at least one candidate motion vector describes a change in position of said region from said first image to said second image;

a third logic block (56) for modifying said first and second images by setting pixel intensities in said region in said first and second images to a default intensity; and

wherein said first, second and third logic blocks repeat until a desired number of motion vectors have been obtained for said first and second images said obtaining, determining, and modifying, using said first and second images as modified by said third logic block, wherein said obtaining and said determining obtained pixels of default intensity.

12. The video processor of claim 11, wherein said first logic block determines a phase correlation for said first and second images.

13. The video processor of claim 12, wherein said first logic block determines a maximum of said phase correlation for said first and second images.

**Patentansprüche**

1. Verfahren zum Bestimmen von Bewegungsvektoren für ein erstes und ein zweites Bild (210, 220), **gekennzeichnet durch**:

(a) Erlangen von wenigstens einem Kandidatenbewegungsvektor (234, 236), der Bewegung vom ersten Bild zum zweiten Bild darstellt;

(b) Bestimmen einer Region im ersten Bild (212, 214) und zweiten Bild (222, 224), für die der Kandidatenbewegungsvektor eine Änderung der Position der Region vom ersten Bild zum zweiten Bild beschreibt;

(c) Modifizieren des ersten und zweiten Bildes **durch** Einstellen von Pixelstärken in der Region im ersten und zweiten Bild auf eine Standardstärke; und

(d) Wiederholen, bis eine gewünschte Anzahl von Bewegungsvektoren für das erste und zweite Bild erlangt wurde, das Erlangen, Bestimmen und Modifizieren unter Verwendung des ersten und zweiten Bildes, die wie in (c) modifiziert wurden, wobei das Erlangen und das Bestimmen Pixel der Standardstärke ignorieren.

2. Verfahren nach Anspruch 1, wobei das Erlangen von wenigstens einem Kandidatenbewegungsvektor Folgendes umfasst:

Berechnen einer Korrelation zwischen dem ersten und zweiten Bild als eine Funktion des Versatzes von einem von dem ersten und zweiten Bild relativ zu dem anderen von dem ersten und zweiten Bild; und wenn die Korrelation eine ausgewählte Bedingung erfüllt, Auswählen eines Bewegungsvektors, der den Versatz darstellt, als Kandidatenbewegungsvektor aus dem ersten und zweiten Bild.

3. Verfahren nach Anspruch 2, wobei die ausgewählte Bedingung erfüllt ist, wenn die Korrelation ein lokales Maximum oder ein lokales Minimum ist.

4. Verfahren nach Anspruch 3, wobei die ausgewählte Bedingung erfüllt ist, wenn die Korrelation das Maximum ist.

5. Verfahren nach Anspruch 2, wobei die Korrelationsfunktion eine Phasenkorrelationsfunktion ist.

6. Verfahren nach Anspruch 1, wobei die Standardstärke einen Stärkewert von null hat.

7. Verfahren nach Anspruch 1, wobei das Erlangen von wenigstens einem Kandidatenbewegungsvektor ein Durchsuchen des ersten Bildes und des zweiten Bildes nach übereinstimmenden Regionen umfasst.

8. Computer (100), umfassend eine Verarbeitungseinrichtung (102) und einen computerlesbaren Speicher (104, 106), der zum Ausführen des Verfahrens nach Anspruch 1 angepasst ist.

9. Computerlesbares Medium (112), auf dem computerausführbarer Code gespeichert ist, wobei der Code bei Ausführung durch einen Computer den Computer dazu anpasst, das Verfahren nach Anspruch 1 auszuführen.

10. Verfahren nach Anspruch 5, wobei das Bestimmen ein Bestimmen eines lokalen Maximums der Phasenkorrelation umfasst.

11. Videoverarbeitungseinrichtung (50), **gekennzeichnet durch**:

einen ersten Logikblock (52) zum Erlangen von wenigstens einem Kandidatenbewegungsvektor (234, 236), der Bewegung von dem ersten Bild (210) zu dem zweiten Bild (220) darstellt; einen zweiten Logikblock (54) zum Bestimmen einer Region im ersten Bild (212, 214) und im zweiten Bild (222, 224), für die der wenigstens eine Kandidatenbewegungsvektor eine Änderung der Position der Region vom ersten Bild zum zweiten Bild beschreibt; einen dritten Logikblock (56) zum Modifizieren des ersten und zweiten Bildes **durch** Einstellen von Pixelstärken in der Region im ersten und zweiten Bild auf eine Standardstärke; und wobei der erste, zweite und dritte Logikblock, bis eine gewünschte Anzahl von Bewegungsvektoren für das erste und zweite Bild erlangt wurde, das Erlangen, Bestimmen und Modifizieren unter Verwendung des ersten und zweiten Bildes, die vom dritten Logikblock modifiziert wurden, wiederholen, wobei das Erlangen und das Bestimmen Pixel der Standardstärke ignorieren.

12. Videoverarbeitungseinrichtung nach Anspruch 11, wobei der erste Logikblock eine Phasenkorrelation für das erste und das zweite Bild bestimmt.

13. Videoverarbeitungseinrichtung nach Anspruch 12, wobei der erste Logikblock ein Maximum der Phasenkorrelation für das erste und das zweite Bild bestimmt.

**Revendications**

1. Procédé de détermination de vecteurs de mouvement pour des première et deuxième images (210, 220), **caractérisé par** :

(a) l'obtention d'au moins un vecteur de mouvement candidat (234, 236) représentant le mouvement à partir de ladite première image à ladite deuxième image ;

(b) la détermination d'une région dans ladite première image (212, 214) et dans ladite deuxième image (222, 224) pour laquelle ledit au moins un vecteur de mouvement candidat décrit un changement de position de ladite région, de ladite première image à ladite deuxième image ;

(c) la modification desdites première et deuxième images par réglage d'intensités de pixels dans ladite région dans lesdites première et deuxième images jusqu'à une intensité par défaut ; et

(d) la répétition, jusqu'à ce qu'un nombre voulu de vecteurs de mouvement ait été obtenu pour lesdites première et deuxième images, desdites obtention, détermination et modification à l'aide desdites première et deuxième images telles que modifiées en (c), ladite obtention et ladite détermination ignorant les pixels d'intensité par défaut.

2. Procédé selon la revendication 1, dans lequel ladite obtention d'au moins un vecteur de mouvement candidat comprend :

le calcul d'une corrélation entre lesdites première et deuxième images sous forme de fonction de déplacement d'une desdites première et deuxième images l'une par rapport à l'autre desdites première et deuxième images ; et lorsque ladite corrélation répond à une conditions choisie, la sélection d'un vecteur de mouvement représentant ledit déplacement sous la forme dudit vecteur de mouvement candidat à partir desdites première et deuxième images.

3. Procédé selon la revendication 2, dans lequel ladite condition choisie est satisfaite lorsque ladite corrélation est un maximum local ou un minimum local.

4. Procédé selon la revendication 3, dans lequel ladite condition choisie est satisfaite lorsque ladite corrélation est le maximum.

5. Procédé selon la revendication 2, dans lequel ladite fonction de corrélation est une fonction de corrélation de phase.

6. Procédé selon la revendication 1, dans lequel ladite intensité par défaut a une valeur d'intensité de zéro.

7. Procédé selon la revendication 1, dans lequel ladite obtention d'au moins un vecteur de mouvement candidat comprend la recherche de ladite première image et de ladite deuxième image pour des régions concordantes.

8. Ordinateur (100) comprenant un processeur (102) et une mémoire lisible par ordinateur (104, 106) conçue pour appliquer le procédé de la revendication 1.

9. Support lisible par ordinateur (112) stockant sur celui-ci un code exécutable sur ordinateur, ledit code, lorsqu'il est exécuté par un ordinateur, adaptant ledit ordinateur pour appliquer le procédé de la revendication 1.

10. Procédé selon la revendication 5, dans lequel ladite détermination comprend la détermination d'un maximum local de ladite corrélation de phase.

11. Processeur vidéo (50) **caractérisé par** :

un premier bloc logique (52) permettant d'obtenir au moins un vecteur de mouvement candidat (234, 236) représentant le mouvement à partir de ladite première image (210) vers ladite deuxième image (220) ; un deuxième bloc logique (54) permettant de déterminer une région dans ladite première image (212, 214) et dans ladite deuxième image (222, 224) pour laquelle ledit au moins un vecteur de mouvement candidat décrit une variation de position de ladite région à partir de ladite première image jusqu'à ladite deuxième image ; un troisième bloc logique (56) permettant de modifier lesdites première et deuxième images par réglage des intensités de pixels dans ladite région dans lesdites première et deuxième images à une intensité par défaut ; et dans lequel lesdits premier, deuxième et troisième blocs logiques répètent, jusqu'à ce qu'un nombre voulu de vecteurs mouvement ait été obtenu pour lesdites première et deuxième images, lesdites obtention, détermination et modification, à l'aide desdites première et deuxième images telles que modifiées par ledit troisième bloc logique, ladite obtention et ladite détermination ignorant les pixels d'intensité par défaut.

12. Processeur vidéo selon la revendication 11, dans lequel ledit premier bloc logique détermine une corrélation de phase pour lesdites première et deuxième images.

13. Processeur vidéo selon la revendication 12, dans lequel ledit premier bloc logique détermine un maximum de ladite corrélation de phase pour lesdites première et deuxième images.

```
                    ┌─────────────────────┐
                    │   Primary Memory    │
                    │        104          │
                    └─────────────────────┘
                              │
┌─────────────────┐ ┌─────────────────────┐ ┌─────────────────┐
│     Input       │ │     Processor       │ │    Output       │
│     108         ├─┤       102           ├─┤     110         │
└────────┬────────┘ └─────────────────────┘ └─────────────────┘
         │                    │
         │          ┌─────────────────────┐
         │          │  Secondary Memory   │
         │          │        106          │
         │          └─────────────────────┘
┌────────┴────────┐
│ Removable Memory│
│      112        │
└─────────────────┘
```

# FIG. 1

FIG. 2

**FIG. 3**

**FIG. 4**

**FIG. 5**

S100

```
        ┌─────────────┐
        │    Start    │
        └──────┬──────┘
               │
               ▼
     ┌──────────────────┐
     │  Obtain a candidate │ S1002
     │   motion vector   │
     └────────┬─────────┘
               │
               ▼
     ┌──────────────────┐
     │ Determine first and │ S1004
     │   second regions  │
     └────────┬─────────┘
               │
               ▼
     ┌──────────────────┐
     │ Modify first and second │ S1006
     │      images       │
     └────────┬─────────┘
               │
               ▼
     ┌──────────────────┐
     │   Obtain and store   │
     │ candidate motion vector │ S1008
     │  from modified first and │
     │    second image    │
     └────────┬─────────┘
               │
               ▼
        ┌─────────────┐
        │     End     │
        └─────────────┘
```

# FIG. 6

**FIG. 7**

**FIG. 8**

S120

Start

Determine correlation
function        S1202

Select peak of
correlation function    S1204

Determine corresponding
motion vector    S1206

To
S1004

# FIG. 9

FIG. 10

EP 2 347 388 B1

**FIG. 11**

EP 2 347 388 B1

S180

```
         ┌─────────┐
         │  Start  │
         └─────────┘
              │
              ▼
    ┌──────────────────┐
    │ Obtain a candidate│  S1002
    │  motion vector    │
    └──────────────────┘
              │
              ▼
    ┌──────────────────┐
    │ Determine first and│ S1004
    │  second regions   │
    └──────────────────┘
              │
              ▼
    ┌──────────────────┐
    │ Modify first and second│ S1006
    │      images       │
    └──────────────────┘
              │
              ▼
         ╱◇╲  S1802
    N ◇ Exit condition unit? ◇
              │ Y
              ▼
    ┌──────────────────┐
    │ Store candidate motion│ S1804
    │     vectors       │
    └──────────────────┘
              │
              ▼
         ┌─────────┐
         │   End   │
         └─────────┘
```

**FIG. 12**

210"

**FIG. 13**

220"

**FIG. 14**

S182

```
                    ┌──────────┐
                    │  Start   │
                    └────┬─────┘
                         │                              │
                         ▼                              │
              ┌────────────────────┐   S1002            │
              │  Obtain a candidate │                    │
              │   motion vector     │                    │
              └──────────┬─────────┘                    │
                         │                              │
                         ▼    S1822                     │
                       ╱─────────────╲                  │
            Y      ╱  Sufficient       ╲     N          │
         ┌────────╱ number of candidate  ╲──────┐       │
         │        ╲ vectors obtained?     ╱      │       │
         │          ╲─────────────╱              │       │
         ▼                                       ▼       │
┌──────────────────┐ S1824      S1004 ┌────────────────┐ │
│ Store candidate   │                  │ Determine first │ │
│  motion vectors   │                  │ and second      │ │
└────────┬─────────┘                  │   regions       │ │
         │                            └────────┬───────┘ │
         ▼                                     │         │
    ┌────────┐                                 ▼         │
    │  End   │                  S1006 ┌────────────────┐ │
    └────────┘                        │ Modify first and│ │
                                      │ second images   │─┘
                                      └────────────────┘
```

# FIG. 15

S140

From
S1002

Select one of obtained
candidate motion vectors    S1402
not previously selected

Displace images by    S1404
selected candidate
motion vector

Calculate error of pixels    S1406
in overlapped region of
displaced images

Identify regions of low    S1408
error as part of first and
second regions

S1410
Any
obtained CMV not already    Y
selected?

N

To
S1006

# FIG. 16

FIG. 17

## 50

Frame Buffer 60

Frame Buffer 62

Motion Vector Determine 52

Region Determine 54

Image Modify 56

# FIG. 18